# EUROPEAN PATENT SPECIFICATION

(11) **EP 2 693 279 B1**
(45) Date of publication and mention of the grant of the patent: **21.02.2018**
(21) Application number: 12178911.9
(22) Date of filing: 01.08.2012
(51) Int. Cl.: G05B 17/02

(54) **Method and program for generating a simulator**
Verfahren und Programm zur Erzeugung eines Simulators
Procédé et programme pour générer un simulateur

(43) Date of publication of application: 05.02.2014
(73) Proprietor: FUJITSU LIMITED, Kawasaki-shi, Kanagawa 211-8588 (JP)
(72) Inventor: van den Berghe, Sven, Marlow, Buckinghamshire SL7 3LE (GB)
(74) Representative: Hutchison, James

(56) References cited:
- EP-A1- 1 143 347
- US-A1- 2005 187 643
- US-A1- 2009 089 027
- US-A1- 2010 070 098

## Description

This invention lies in the field of simulating the behaviour physical systems, and in particular relates to generating a simulator suitable for embedding in control software.

One of the areas in which the growth of IT is being applied is into the automated control of systems that deliver services, with increasing emphasis placed on the optimisation of the operation of these systems.

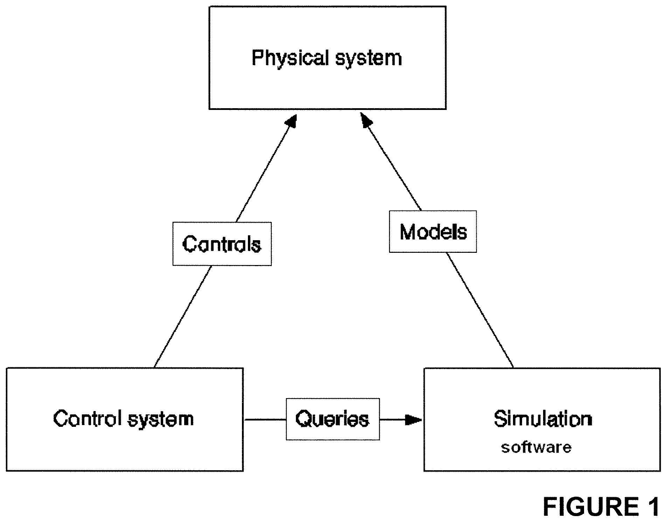

Software systems are used to control many physical systems, such as the allocation of workload in a data centre, the environment of office buildings and the operation of factories. The goal of these software systems is to ensure the correct operation of the physical system that they control. Often the correct operation will be defined in terms of goals such as to ensure that the physical system operates in the most efficient way possible. For complex physical systems, the optimal operating conditions are usually not directly known, and in addition may be changeable depending on certain boundary conditions, and so the control system needs to perform some sort of optimisation process, i.e. evaluating the physical system's performance for a large range of operating parameter values and selecting the best set of parameter values found. In order to do this, the control systems may utilise a model of the physical system that can be initialised with initialising conditions including external conditions and potential operating parameters, and upon execution will return the output values representing the behaviour of the physical system, such as performance indicators including the energy use of the physical system. Such models may be provided by a simulation software program that executes the model to simulate the performance of the target system. Document US 2009 / 0089027 A1 discloses a system in which a simulation component generates output in view of one or more simulation models. Figure 1 illustrates the relationship between the physical system, the control system, and the simulation software. The simulation software models the physical system, for example, by representing elements of the physical system with simulation elements, which are effectively instructions for receiving input data and transforming them into output data in accordance with one or more rules or functions.

The control system queries the simulation software. The line labelled "queries" may result in the model being executed many times by the simulation software with a range of different combinations of initialising conditions (including operating parameters for which optimum/desirable settings are sought and external conditions). The simulation software responds to the "queries" with performance indicators for the range of combinations of initialising conditions to enable the control software to select the optimum settings for adjustable operating parameters in the physical system. The control system controls the physical system accordingly.

The requirements of the control software are usually different from the requirements of the simulation software. Control programs emphasise real-time response and fast execution for the search of a parameter space for optimisation of adjustable operating parameters.

Simulation programs are written for flexibility to enable simulations to be run with models of a wide variety of physical systems and the ability to cope with a large input parameter space.

At its core, finding optimal operating parameters in order to achieve desired system performance is a process of sampling the possible range of values of critical operating parameters with different foreseeable external conditions, executing the model with those samples and evaluating the response (e.g. the returned performance indicators). The operating parameter values that produce the 'best' performance given certain external conditions can then be set in the physical system. With a large number of different parameters this search process soon becomes time consuming, for example, if there are 10 independently variable parameters, each of which can take 10 significantly different values, then a naïve optimisation process would require 10^10 computations of the target systems performance. There are many techniques that can guide an optimisation search and will reduce the number of required evaluations, but a good optimisation requires a large number of evaluations.

Good optimisation also requires an accurate simulation of the physical system, which may be achieved by using a general simulation program providing a number of options for modelling each of the various elements of the physical system which are to be represented in the model. Accurate simulation can be achieved, for example, by using model elements which closely reflect the complex physical processes taking place in the physical system.

Embodiments of the present invention include a method for producing a simulator configured to simulate the behaviour of a target physical system, the simulator comprising a simulation model representing the target physical system and a simulation execution environment in which the simulation model is executable; the method comprising: obtaining an initial model configured for execution in a first execution environment and representing the target physical system, the initial model specifying permitted combinations of values from among ranges of possible values for a plurality of independently variable initialising conditions provided by the first execution environment; generating, as the simulation execution environment, a constrained version of the first execution environment which is configured to provide only a constrained set of possible values for the plurality of independently variable initialising conditions based on the specified permitted combinations of values; and generating, as the simulation model, a representation of the initial model which is executable in the simulation execution environment.

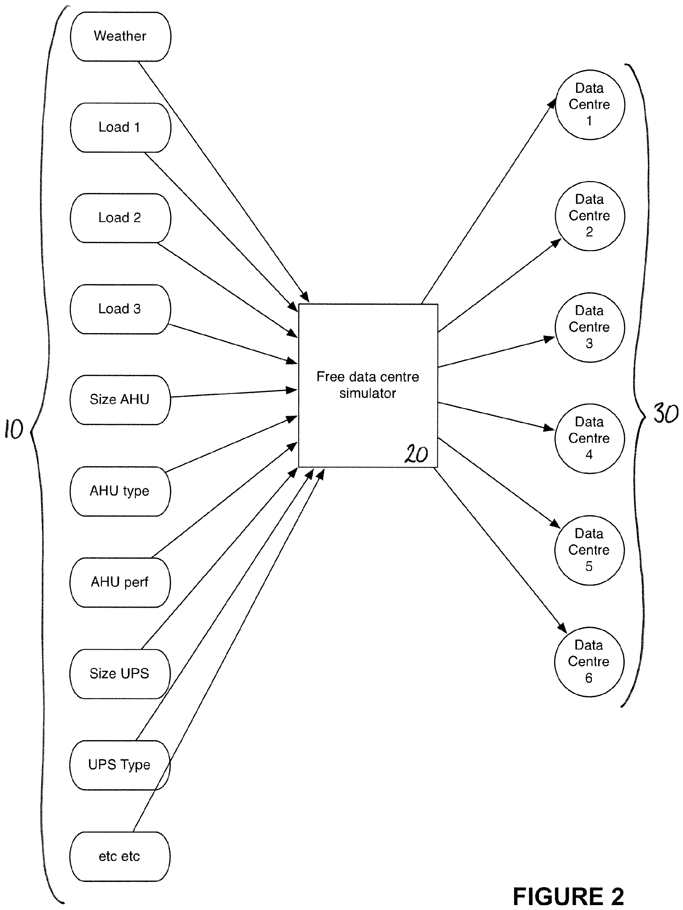

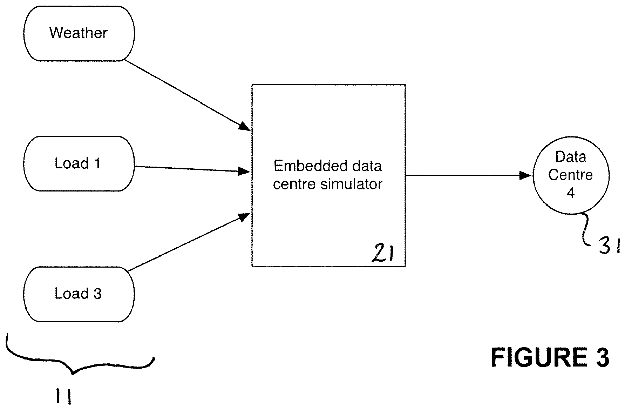

General simulation programs account for a wide range of possible input values for a large number of different independently variable initialisation conditions, many of which will be unused, or only used in a sub range of the range of possible input values, in modelling a particular physical system. Figure 2 illustrates a general simulation program (denoted by "free data centre simulator") 20 which is configured to accept values of a number of different independently variable initialising conditions 10 in order to run simulations of a number of different physical systems 30. The free data centre simulator 20 is designed to simulate the response of any of a plurality of different modelled data centres 30 under any weather and load conditions 10. However, as illustrated in Figure 3, when a data centre simulator is embedded in a program to control the modelled data centre as an embedded data centre simulator 21, then its initialising conditions 11 are constrained to the weather and load conditions influencing the behaviour particular data centre 31 that is modelled (insofar as those conditions are represented by the model).

Advantageously, embodiments of the present invention exploit the reduction in independently variable initialising conditions required to model a particular physical system rather than a number of different physical systems. The simplified simulation execution environment generated in embodiments of the present invention enables control programs to be embedded with simulators that are simpler than their non-embedded versions.

The target physical system may be a physical system such as a data centre in IT, factory equipment, building management systems, complex machinery, power systems etc. It may be that the target physical system has one or more adjustable parameters affecting performance of the physical system. It may be desirable to use control software to adjust those adjustable parameters. Control software with an embedded simulator can evaluate the modelled response of the physical system to different combinations of external conditions and adjustable parameter settings (which may be input to the model as initialising conditions) and settings of the adjustable parameters to achieve a desired response given certain external conditions found and implemented as required. Advantageously, embodiments of the present invention provide a technique for producing simulators which are tailored in terms of providing a limited set of initialising conditions reflecting those which are required for controlling the target physical system in question. The complexity of the embedded simulator is thus reduced compared with embedding a simulator which has more degrees of freedom in terms of initialising conditions. Hence performance improvements are achieved, such as a reduction in storage space required for the embedded simulator and improved execution speed of the embedded simulator.

The initial model may be a complex representation of the target physical system which is designed to accurately predict performance parameters of the physical system and to be run in a 'free' execution environment, such as a simulation program enabling models of a wide variety of types and configurations of physical systems to be executed with wide ranges of initialising conditions. It should be understood in this document that 'initialising conditions' includes possible operating parameters of simulation elements and external conditions. Embodiments of the present invention provide a technique for generating a simulator based on the initial model and the simulation environment in which the initial model is executable, but which is constrained to provide only a limited set of initialising conditions in accordance with those required for modelling the target physical system. Hence the simulator can be separated from aspects of the 'free' execution environment which are not needed in modelling the target physical system. This is advantageous in terms of generating a simulator which is adapted for a specific purpose, but also in terms of enabling a simulator provider to produce and distribute simulators without providing full simulation capability to the recipients of the simulators. Thus, simulator providers may be more inclined to provide simulators to control system providers, leading to an overall improvement in the ability of control systems to find and implement optimum settings in physical systems. Benefits such as more efficient operation of physical systems, less energy use, and higher utilisation of resources are hence derivable from embodiments of the present invention.

An execution environment is a functional entity which is configured to run simulations by inputting data to a model, performing processing, and outputting data, in accordance with instructions indicated by the model. For example, the execution environment may be configured to initialise executions of a simulation model with values of initialising conditions (based on rules which may be included in the model) and to instruct a processor (either directly or via some other software, such as an operating system or otherwise) to perform the processing required to receive input data and convert them into output data in a manner determined by the simulation model. A process of executing a model in an execution environment may at least include the execution environment providing initialising data to a model, to instruct the execution of the model, and to distribute or make available for distribution (for example, to a control system) the performance indicators resulting from the execution. An execution environment may be exemplified by a simulation program or simulation software.

The first execution environment may be configured to execute simulation models having any of a number of arrangements of simulation elements and interconnections and to provide simulation models being executed with any of a range of values for each of a number of independently variable initialising conditions. Of course, each initial model may in fact require only a subset of the full number of independently variable initialising conditions upon execution, and may not require the full range of values of those initialising conditions in the subset. Such requirements may be specified in an initial model itself as permitted combinations of values of independently variable initialising conditions.. Embodiments of the present invention enable a constrained version of the first execution environment to be generated by generating a simulation environment which is configured to provide only the values of initialising conditions required for executing a particular simulation model. In that sense, the execution environment so generated is constrained to that particular initial model, or to the simulation model based on that initial model.

For example, some of the independently variable initialising conditions may not be used at all by a particular model - the term 'model' is taken to include both an initial model and the simulation model based on that initial model (it is assumed that an initial model and the simulation model based on that initial model will permit the same combinations of initialising conditions). Therefore, it may be that an execution environment constrained to that particular model will be generated by removing the functionality from the first execution environment which specifically deals with modelling the unused initialising conditions.

In addition, generating the constrained version of the first execution environment may include: identifying, from among the specified permitted combinations of values, a first set of independently variable initialising conditions being those whose values are permitted to take only a single fixed value; and for each of the independently variable initialising conditions in the first set: either setting the independently variable initialising conditions in the constrained set of the range of possible values to be a constant value representing the respective single fixed value; or including a constant value representing the single fixed value of the independently variable initialising condition in the simulation model.

Advantageously, the constrained version of the first execution environment is simplified by the step of fixing one or more independently variable initialising conditions to be a constant value based on the single fixed value. The step of fixing the constant value based on the single fixed value may include making the two values equal to within a predetermined rounding error. The constant value should represent the single fixed value. Rather than requiring complicated logic to represent an independently variable initialising condition as any of a range of values, which may include logic required to calculate those values, the constrained version of the first execution environment is simplified and requires only than a constant value be stored as an initialising condition.

In addition, embodiments may include identifying, from among the specified permitted combinations of values, a second set of independently variable initialising conditions being those whose values are permitted to take a range of values; and in the constrained set of the range of possible values, setting the value of each of the independently variable initialising conditions in the second set to be selectable from a plurality of values representing the respective range of values.

For example, it may be that the plurality of values from which the values of a particular initialising condition in the second set is selectable is a discrete set of regularly spaced values from the range of values which that particular initialising condition is permitted to take. Alternatively, it may be that the plurality of values is given as a range, by a specified upper and lower limit of the range of values which the particular initialising condition is permitted to take.

Constraining the simulation execution environment by any or all of the above methods for limiting the number of permissible values of initialising conditions and the complexity of the logic for deriving those values (by simply storing possible values) will tailor the simulation execution environment to a particular model. However, the simulation execution environment may be further constrained by reducing the freedom of the execution environment to handle different arrangements of simulation elements and interconnections.

In such methods, it may be that those independently variable initialising conditions whose values are permitted to take only a single fixed value in the initial model are included in the simulation model itself, and hence are not provided as part of the constrained set.

For example, in embodiments of the present invention the obtained initial model also specifies a particular arrangement of simulation elements and interconnections from among a plurality of arrangements executable in the first execution environment; and the simulation model specifies a simulation arrangement of simulation elements and interconnections based on the particular arrangement.

Furthermore, it may be that the simulation execution environment is configured to execute only simulation models having the simulation arrangement.

General simulation programs account for modelling a wide variety of different types of physical systems having effectively infinite different possible arrangements and configurations. As an example consider a data centre energy simulator. It is designed to simulate the response of any data centre configuration (arrangements of equipment in terms of types and numbers and their interconnections) to weather and load conditions. However, when this energy simulator is embedded in a program to control the modelled data centre, then it is constrained to the particular configuration/arrangement used to model the particular data centre that it is controlling. Embedded simulators can be much less flexible as they model the behaviour of a particular instance of the range of configurations that a general simulator is designed to simulate.

For example, it may be that in generating the simulation execution environment, processing routines not required to execute a model having the simulation arrangement are not included in the simulation execution environment. Alternatively, of all the processing routines provided in the initial execution environment, only those processing routines required for the particular arrangement of simulation elements and interconnections are selected for inclusion in the simulation execution environment. Of course, the precise technique by which the simulation execution environment is compiled will depend on the implementation details of the invention embodiment. For example, it may be that the form of simulation elements in the initial model is very similar to that in the simulation model, in which case the simulation execution environment may be compiled by selecting/excluding processing routines from the initial execution environment associated with the wanted/unwanted simulation elements in the particular arrangement. Alternatively, it may be that simulation elements are concatenated and simplified in the generation of the simulation model, so that dedicated processing routines are available for inclusion in the simulation execution environment which are different (for example, simpler, quicker to process) than those in the initial execution environment.

The term simulation element may be considered to be a point in the model at which a function is performed on input variables (whether they be received directly as an initialising condition or received from an interconnection from another simulation element) in order to generate an output. Interconnections represent the use of an output of one simulation element as the input of another.

The simulator may be realised by a single non-configurable algorithm. For example, the algorithm may take values from among the constrained set of the range of possible values for each of the plurality of independently variable initialising conditions as inputs and generate performance indicators as outputs.

Embodiments may also include selecting functions to represent the initial model from a predetermined set of configurable basis functions and configuring the selected basis functions based on the initial model.

Advantageously, selecting functions from a predetermined set of configurable basis functions enables the simulation execution environment to be optimised to perform functions from the predetermined set. The set of configurable basis functions may have a generalised form such as sine/cosine/square/inverse square/reciprocal/general polynomial, and have parameters which are configurable such as coefficients, shifts along axes, overall scaling etc. The simulation execution environment can be provided with logic required to iteratively perform the basis functions in a computationally efficient manner to enable fast execution of the simulation model. The first execution environment on the other hand, may be configured to handle a far greater range of mathematical functions, which enables accurate modelling of a physical system, but the range is at the expense of efficient performance routines, and hence executing models in the first execution environment is slower than in the simulation execution environment.

The functions may be selected by a set of rules for selecting a basis function to represent a particular function(s), simulation element(s), or combinations thereof. Such a set of rules may be implemented in a lookup table. The set of rules may also include instructions on how to configure the basis function in dependence upon properties of the initial model.

Furthermore, selecting the basis functions and/or configuring the selected basis functions based on the initial model may include: executing the initial model in the first execution environment with a plurality of different combinations from among the specified permitted combinations of values; and selecting and/or configuring the selected basis functions based on results of the executing.

Advantageously, the generating of the simulation model can thus be independent of any prior knowledge of what happens within the first execution environment. The simulation model can be generated and configured based on empirical knowledge of the initial model. The outputs of a series of executions of the initial model in the first execution environment with certain combinations of initialising conditions can be used as a target set of outputs which the simulation model is adapted to match (as closely as possible or to within an allowable tolerance) by selecting and configuring functions from the predetermined set for an equivalent set of initialising conditions. Outputs may be available from various points in the initial model during execution, not only final outputs. Particular portions of the simulation model can thus be adapted to emulate the results of the corresponding portion of the initial model.

Depending on the implementation details, it may be that the performance of the simulation model in the simulation execution environment, in terms of either the accuracy with which it is able to replicate the results of the execution of the initial model in the first execution environment, or in terms of speed/efficiency of execution, is improved by the inclusion of one or more lookup tables to represent all or part of the initial model.

In embodiments, generating a representation of the initial model may include: executing the initial model in the first execution environment with a plurality of different combinations from among the specified permitted combinations of values; and creating one or more lookup tables to represent the initial model or a subsection thereof in the simulation model based on the results of the executing.

For example, it may be that the set of predetermined set of basis functions is too limited to represent a particular section of the initial model to an acceptable degree of accuracy. That particular part may be represented instead by a lookup table. The axes of the lookup table are the independent inputs to the particular section, which will be the independently variable initialising conditions if the particular section is the whole model, and the entries are the outputs.

Alternatively or additionally, embodiments of the present invention may include, from the initial model, identifying a portion comprising more than one interconnected simulation entity which can be represented by a single function converting the inputs to the identified portion to the outputs of the identified portion, and selecting and configuring a function to represent the identified portion of the initial model in the simulation model, based on the inputs to and outputs from the identified portion in a series of executions of the initial model in the first execution environment.

Advantageously, replacing more than one interconnected simulation entity by a single function simplifies the model and hence makes the simulation model quicker to process. It may be that some accuracy is sacrificed in representing a portion of the initial model by a single function, but that, by running the initial model in the first execution environment analysis of the inputs to and outputs from the portion enable the accuracy of the function in representing the portion of the model to be assessed. Then, if the accuracy of the function fulfils certain accuracy criteria (ie. a predetermined proportional tolerance, and/or the most accurate from a selection of differently configured functions), the function can be included in the simulation model.

Embodiments of the present invention include dedicated hardware devices, programs, and methods, which may be computer-implemented methods. In a computer-implemented method, the functionality of existing computer hardware such as I/O devices, processor, memory, storage, and network interface card, among others, may be used in performing a method embodying the invention.

Embodiments of the present invention may be implemented in modelling and controlling physical systems in a wide range of scenarios, and are particularly suited to physical systems which are controlled by a controller having controller software and/or a controller with a processor. In an exemplary embodiment, the physical system is a data centre and the simulator is a data centre energy simulator.

In such an embodiment or otherwise, the method may further comprise embedding the produced simulator in a control program for use in controlling the target physical system. Embedding the produced simulator in a control program may be taken to mean installing the simulator on a computing device on which the control program is installed, or running the control program and simulator in such a way that the control program can send queries to the simulator and receive responses.

In embodiments of another aspect of the present invention there is provided a simulator producing apparatus operable to produce a simulator configured to simulate the behaviour of a target physical system, the simulator comprising a simulation model representing the target physical system and a simulation execution environment in which the simulation model is executable; the apparatus comprising: an initial model obtaining unit operable to obtain an initial model initial model configured for execution in a first execution environment and representing the target physical system, the initial model specifying permitted combinations of values from among ranges of possible values for a plurality of independently variable initialising conditions provided by the first execution environment; and a simulation execution environment generator unit operable to generate, as the simulation execution environment, a constrained version of the first execution environment which provides only a constrained set of possible values for the plurality of independently variable initialising conditions based on the specified permitted combinations of values; and a simulation model generator operable to generate, as the simulation model, a representation of the initial model which is executable in the simulation execution environment.

Embodiments of the present invention also extend to a computer program or suite of computer programs which, when executed by a computer or suite of computers, causes the computer or suite of computers to perform a method embodying the present invention, or to function as an apparatus embodying the present invention. The computer program or suite of computer programs may be stored on a storage medium such as a non-transitory storage medium, and may be provided as a computer program product.

Specific examples embodying the present invention will now be described, purely by way of example, with reference to the accompanying drawings, in which:
Figure 1 illustrates the relationships between a physical system, a control system, and simulation software;
Figure 2 illustrates independently variable initialising conditions being used to simulate a number of different physical systems;
Figure 3 illustrates an embedded simulator using a constrained set of independently variable initialising conditions;
Figure 4 is a conceptual illustration of a process embodying the present invention;
Figure 5 is a schematic representation of a process of controlling a physical system using a simulator produced by an embodiment of the present invention;
Figure 6 exemplifies a complex or initial model;
Figure 7 exemplifies a simplified or simulation model corresponding to Figure 6.

Some of the examples in this document relate to a particular implementation of an invention embodiment, which is in the field of data centre control systems and data centre energy flow simulators. Data centre control systems may be configured to control the placement of IT load in a data centre (both across different pieces of IT equipment in the data centre and to changing the time of execution of the data centre load). Of course, the skilled reader will appreciate that embodiments of the present invention are not restricted to such applications and can also be applied to many other control scenarios such as factories, buildings, pieces of complex machinery, community power systems etc.

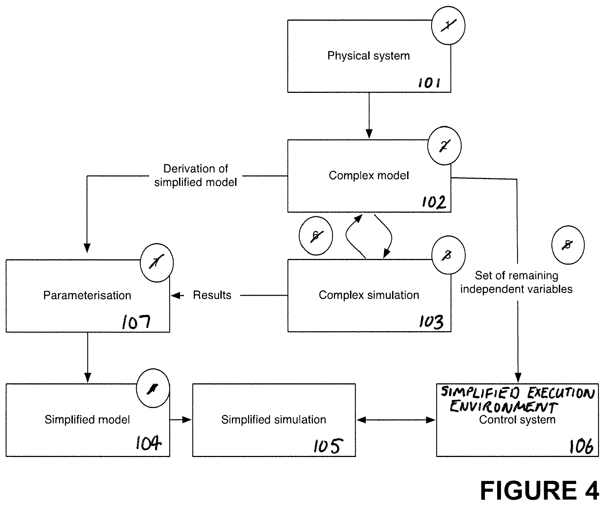

Figure 4 is a conceptual illustration of a process embodying the present invention. A complex model 102 of a physical system 101 is created or obtained. The complex model 102 is configured for execution in an execution environment, which execution is represented in Figure 4 as "complex simulation" 103. The execution environment may be a general simulator program, which may also have been used to create the complex model 102.

The complex model 102 may be considered to be an initial model representing the physical system 101 and specifying permitted combinations of values of independently variable initialising condition values from among a range of possible values for each of a plurality of independently variable initialising conditions provided by the execution environment in which the complex simulations 103 take place. Additionally or alternatively, the complex model 102 may also specify a particular arrangement of simulation elements and interconnections from among a plurality of arrangements executable in the execution environment in which the complex simulations 103 take place.

The complex model 102 is analysed and a simplified model 104 derived, via an optional parametrisation process 107. Deriving the simplified model 104 may include selecting functions to represent the complex model 102 from a predetermined set of configurable basis functions and configuring the selected basis functions based on the complex model 102 (which configuring may be included as part of the parametrisation 107). Alternatively or additionally, deriving the simplified model 104 may include identifying a portion comprising more than one interconnected simulation entity in the complex model 102 which can be represented by a single function converting the inputs to the identified portion to the outputs of the identified portion, and selecting and configuring a function to represent the identified portion of the initial model in the simplified model 104. The selecting and configuring of the function may be included as part of the parametrisation 107.

The parametrisation process 107 uses complex simulations 103 to obtain results which are effectively target results for the simplified model 104 when executed with equivalent inputs. The parametrisation process 107 may include identifying the specified permitted combinations of independently variable initialising condition values in the complex model 102, and extracting those independently variable initialising conditions whose values are variable in the complex model 102. Those which are fixed values may simply be included in the simplified model 104 as constants. Those which are variable may be used in running a complex simulation 103 with each permitted combination, or with a representative subset of permitted combinations (for example, by increasing intervals between permitted values of a particular initialising condition). The results can then be stored and used to produce lookup tables to represent all or part of the complex model 102 in the simplified model 104 and/or to select and configure functions used to represent different sections of the complex model 102 in the simplified model 104. Incidentally, the permitted values of the extracted initialising conditions, or a representative subset of those permitted values, are also be provided to the simplified execution environment 106 for use as inputs in executing the simplified model 104.

For example, if the complex model 102 is a network of nodes interconnected by directional arcs, the simplified model 104 may be a reduced network of nodes which are each suitable representations of equivalent nodes or groups of nodes in the complex model 102. That is to say, a step in creating the simplified model (simulation model) 104 may be reducing the complexity of the network representation by concatenating nodes and removing arcs. A next step may be configuring the nodes by creating lookup tables or selecting and configuring basis functions selected from a predetermined set, in accordance with the results of executing the complex model 102 with each of the permitted combination of extracted initialising conditions. Effectively, each node in the simplified model 104 is configured based on the response of the equivalent nodes or groups of nodes in the complex model 102 to different inputs, wherein the inputs may be values of independently variable initialising conditions or values input to the node or nodes by arcs from previous nodes. The simplified model is fixed in its configuration so that it models a specific instance of a physical system.

The same permitted combinations of independently variable initialising conditions (represented in Figure 4 as "set of remaining independent variables") are also passed to the simplified execution environment 106, which may be embedded within a control system/control program/control software. Some of the variables may be permitted to take only a single fixed value, and others may take one of a range of permitted values. It may be that in extracting the permitted combinations from the complex model 102 and providing them to the simplified execution environment 106, some discretisation of the ranges occurs, or rounding up or down of particular values. The permitted combinations passed to the simplified executing environment may be considered to be a constrained set of the range of possible values for each of the plurality of independently variable initialising conditions based on the specified permitted combinations from the complex model 102. The simplified execution environment may thus be considered to have been generated, and is a functional unit configured to query the simplified model 104 and initiate simulations 105 of the simplified model 104 with values of independently variable initialising conditions from the constrained set. The simplified model 104 may be considered to be a single non-configurable algorithm. For example, the algorithm (or the simplified model 104 in whatever form it takes) may take values from among the constrained set of the range of possible values as supplied by the simplified execution environment 106, and generate performance indicators as outputs, thus enabling the simplified execution environment 106 or a controller within which it is embedded to select optimum operating parameters for the physical system 101. The optimum operating parameters may be selectable from among the constrained set of independently variable operating conditions.

A simulator is realised by the simplified model 104 and the simplified execution environment 106, which cooperate to execute simplified simulations 105. The simulator 104, 106, is thus separate from the complex model 102 and from the execution environment in which the complex model 102 is executed as complex simulation 103. Hence, a simulator 104, 106, which is configured in accordance with results of executing the complex model, but which has been simplified to include less freedom to represent different physical systems and to have less freedom in terms of input variables, can be embedded in a controller of the physical system 101. The simulator 104, 106 so produced is simplified which is advantageous in terms of optimisation of execution coding, and also in terms of not embedding unnecessary information in the controller.

As a further alternative, the simplified model could be realised by a single lookup table, with a number of axes equal to the number of independently variable initialising conditions whose values are variable in the complex model. The table entries are given by the results stored as part of the parametrisation process 107 (they could be stored directly into the lookup table).

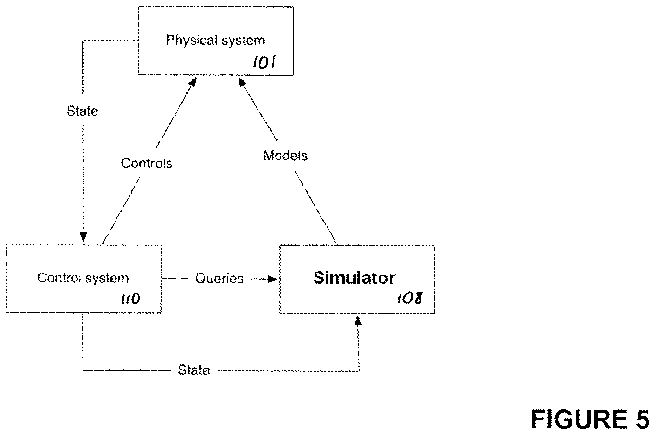

Figure 5 is a schematic representation of a process of controlling a physical system having a control system 110 with an embedded simulator 108 generated in a method embodying the present invention. The simulator 108 encompasses the simplified model 104 and simplified execution environment 106. The simulator models the physical system 101, or more specifically, the simplified model 104 created by a process such as that described above, models the physical system 101. The simulator is embedded in a control system 110 which controls certain adjustable operating parameters in the physical system 101. Being "embedded in" a control system may be taken to mean being made available to accept and respond to queries from that control system. It may be that the embedding establishes an even closer relationship between control system and simulator, for example, the simulator may become a functional module of a software program which is the control system or part of the control system. States and adjustable operating parameters are examples of independently variable initialising conditions. The control system 110 may become aware of a change of state in the physical system. For example, this may be a change in an external condition such as temperature, or it may be a change in an operating state such as workload. The control system may comprise a sensor system or other such mechanism for monitoring states in the physical system 101. The state which is changed is an independent variable in the simplified model 104, that is to say, it is an independently variable initialising condition in the simulator 108. Therefore, in order to find the best (wherein best is taken to mean those that yield the most favourable set of performance indicators by a predetermined metric - which is implementation dependent) set of adjustable parameters to respond to the change in state, the new value of the state is submitted to the simulator 108, and that initialising condition fixed in the execution environment. The simplified model 104 is then executed with different permitted combinations of the adjustable operating parameters from among the constrained set of possible values for those parameters, and the performance indicators generated by each execution returned to the control system for evaluation and selection of settings.

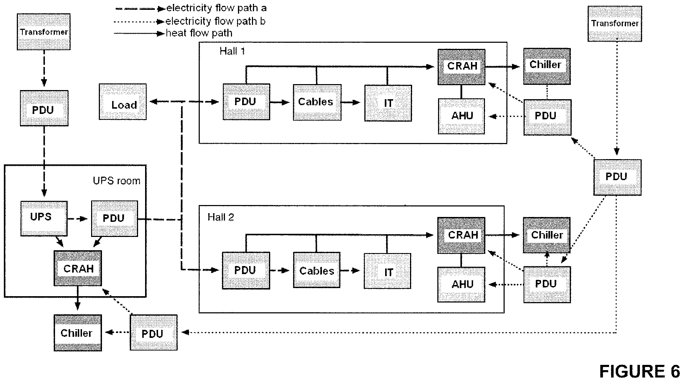

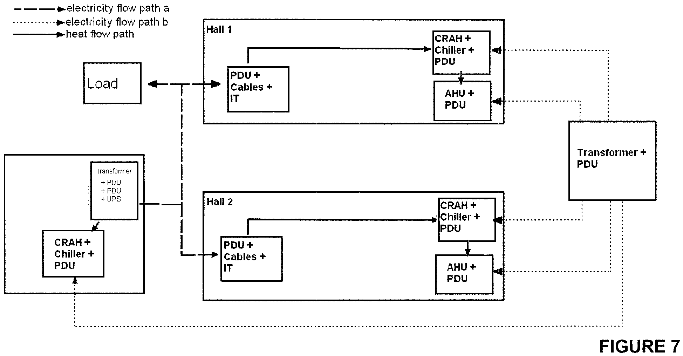

Figures 6 and 7 provide more detail on the process of generating a simulation (simplified) model as a representation of a more complex (initial) model. The example of Figures 6 and 7 uses a model of the flow of energy in a data centre as an exemplary physical system.

Data centres use a lot of electrical power, to run the IT equipment and to remove the resulting heat. Modern software systems (virtualisation technologies) give great flexibility to the physical location of any particular piece of software. This raises the possibility that a data centre could be operated so that the location and timing of IT load is adjusted to optimise the total energy use of the data centre. In order to do this, the process that allocates IT load to computer resources, i.e. Resource Manager, needs to be able to compute the cost of different potential allocations of IT load to resources. The most effective way to do this is through a simulation of the data centre energy use and so the Resource Manager becomes an example of the Control System 110 described above, and the allocation of workload to different potential computer resources is represented by executing the simulation model in the simulator 108 with different workloads at computer resources as independently variable initialising conditions.

Figure 6 shows a typical full model of a data centre's energy flow, which is exemplary of a complex model 102 or initial model. Heat flow paths are shown by full arrows, the two different paths of electricity flow by dashed and dotted arrows. Each of the nodes of the model represents a device in the physical system (data centre) and in the simulation will have a complex function relating the load on the device to the power drawn by the device. The independently variable initialising conditions in this model are the loads (load/IT) plus external temperature (which determines the performance of some of the equipment and is represented by the load on the AHU). The external temperature is an external variable, whereas the "load" and "IT" loads are adjustable operating parameters by virtue of a resource manager which can allocate loads to different computer resources.

As an example of the modelling for a device consider the nodes marked "AHU" representing the units that move and cool the air in Hall 1 and Hall 2. The complex or initial model considers the relationship between the incoming and outgoing water temperature, the incoming and outgoing air temperature and the characteristics of the water content of the air as it is cooled, possibly below the condensation point. This model is complex and the simulation software also accounts for the full range of possibilities in the node characteristics. Therefore, the execution speed of this simulation is too slow to form part of an effective optimisation module for the Resource Manager.

Figure 7 shows a simplified model of the data centre, representing the complex model in Figure 6, but which is simplified in terms of reducing the complexity of the network representation (illustrated) and in terms of the modelling of each node's response to load as a simple cubic polynomial (not illustrated). The cubic polynomials are configured using, for example, the parametrisation process described above. The simplified (simulation) model is considerably smaller and simpler to execute but, as it is fitted to values from executing the complex model, reproduces the full simulation results (at least to a predetermined acceptable degree of accuracy). Embodiments may be configured to apply a set of rules for simplifying the complexity of the model, for example, rules enabling sets of nodes which can be concatenated to be identified. For example, where a set of nodes are connected in series with no other interconnections, or where the other interconnections have little or no impact on outputs or are not independent of the overall output from the series of nodes, a single node may be used to represent the series of nodes. The simplified model can be inserted into the Resource Manager with a simplified execution environment and executed at sufficient speed for efficient optimisation searches.

The information passed from the full simulation to the Resource Manager model is also reduced, a simplified data centre model and parameters for a cubic fit rather than the full device simulation.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method for producing control software for controlling a controllable physical system, the method including producing a simulator (108) configured to simulate the behaviour of the controllable physical system (101), the simulator (108) comprising a simulation model (104) representing the controllable physical system (101) and a simulation execution environment (106) in which the simulation model (104) is executable; the method comprising:
obtaining an initial model (102) configured for execution in a first execution environment (103) and representing the controllable physical system (101), the first execution environment providing simulation models being executed with any of a range of values for each of a number of independently variable initialising conditions, the initial model (102) specifying, from among the range of possible values provided by the first execution environment, a required subset of the number of independently variable initialising conditions and, for each of the subset, a required range of values for controlling the controllable physical system;
generating, as the simulation execution environment (106), a constrained version of the first execution environment which provides only a constrained set of possible values for the plurality of independently variable initialising conditions based on the specified required subset and required range of values for each of the subset, wherein generating the constrained version of the first execution environment includes:
for each of the independently variable initialising conditions in the required subset:
setting the value to be selectable from a plurality of values representing the respective required range of values; and
the method **characterized by**:
generating, as the simulation model (104), a representation of the initial model (102) which is executable in the simulation execution environment (106), wherein generating a representation of the initial model includes executing the initial model (102) in the first execution environment (103) with a plurality of different combinations from among the specified required subset and required range of values for each of the subset, and creating one or more lookup tables to represent the initial model or a subsection thereof in the simulation model (104) based on the results of the executing; and
embedding the produced simulator in a control program for use in controlling the controllable physical system.

2. A method according to claim 1, wherein:
the obtained initial model (102) also specifies a particular arrangement of simulation elements and interconnections from among a plurality of arrangements executable in the first execution environment (103); and
the simulation model (104) specifies a simulation arrangement of simulation elements and interconnections based on the particular arrangement.

3. A method according to claim 2, wherein
the simulation execution environment (106) is configured to execute only simulation models (104) having the simulation arrangement.

4. A method according to any of the preceding claims, wherein generating a representation of the initial model includes:
selecting functions to represent the initial model (102) from a predetermined set of configurable basis functions and configuring the selected basis functions based on the initial model.

5. A method according to claim 4, wherein
selecting the basis functions and/or configuring the selected basis functions based on the initial model includes:
executing the initial model (102) in the first execution environment (103) with a plurality of different combinations from among the specified permitted combinations of values; and
selecting and/or configuring the selected basis functions based on results of the executing.

6. A method according to any of the preceding claims, wherein generating a representation of the initial model includes:
from the initial model (102), identifying a portion comprising more than one interconnected simulation entity which can be represented by a single function converting the inputs to the identified portion to the outputs of the identified portion, and
selecting and configuring a function to represent the identified portion of the initial model (102) in the simulation model (104), based on the inputs to and outputs from the identified portion in a series of executions of the initial model (102) in the first execution environment (103).

7. A method according to any of the previous claims, wherein
the physical system (101) is a data centre and the simulator (108) is a data centre energy simulator.

8. A method according to any of claims 1 to 7, wherein the method is computer-implemented.

9. A simulator producing apparatus operable to produce control software for controlling a controllable physical system, the control software including a simulator (108) configured to simulate the behaviour of the controllable physical system (101), the simulator (108) comprising a simulation model (104) representing the controllable physical system (101) and a simulation execution environment (106) in which the simulation model (104) is executable; the apparatus comprising:
an initial model obtaining unit operable to obtain an initial model (102) configured for execution in a first execution environment (103) and representing the controllable physical system (101), the first execution environment providing simulation models being executed with any of a range of values for each of a number of independently variable initialising conditions, the initial model (102) specifying from among the range of possible values provided by the first execution environment, a required subset of the number of independently variable initialising conditions and, for each of the subset, a required range of values for controlling the controllable physical system; and
a simulation execution environment generator unit operable to generate, as the simulation execution environment (106), a constrained version of the first execution environment which provides only a constrained set of possible values for the plurality of independently variable initialising conditions based on the specified required subset and required range of values for each of the subset, wherein generating the constrained version of the first execution environment includes:
for each of the independently variable initialising conditions in the required subset:
setting the value to be selectable from a plurality of values representing the respective required range of values; and
the apparatus **characterized by**:
a simulation model generator operable to generate, as the simulation model (104), a representation of the initial model (102) which is executable in the simulation execution environment (106), wherein generating a representation of the initial model includes executing the initial model (102) in the first execution environment (103) with a plurality of different combinations from among the specified required subset and required range of values for each of the subset, and creating one or more lookup tables to represent the initial model or a subsection thereof in the simulation model (104) based on the results of the executing; and
the simulator producing apparatus is further configured to embed the produced simulator in a control program for use in controlling the controllable physical system.

10. A computer program which, when executed by a computer, causes the computer to perform a method according to any of claims 1 to 8.

11. A computer program which, when executed by a computer, causes the computer to function as a simulator producing apparatus according to claim 9.

## Patentansprüche

1. Verfahren zur Produktion von Steuerungssoftware zum Steuern eines steuerbaren physischen Systems, wobei das Verfahren das Produzieren eines Simulators (108) beinhaltet, der dazu konfiguriert ist, das Verhalten des steuerbaren physischen Systems (101) zu simulieren, wobei der Simulator (108) ein Simulationsmodell (104), das das steuerbare physische System (101) darstellt, und eine Simulationsausführungsumgebung (106), in der das Simulationsmodell (104) ausführbar ist, umfasst; wobei das Verfahren Folgendes umfasst:
Erhalten eines Anfangsmodells (102), das zur Ausführung in einer ersten Ausführungsumgebung (103) konfiguriert ist und das steuerbare physische System (101) darstellt, wobei die erste Ausführungsumgebung ausgeführte Simulationsmodelle mit einem beliebigen von einem Bereich von Werten für jede einer Anzahl von unabhängig variablen Initialisierungsbedingungen bereitstellt, wobei das Anfangsmodell (102) aus dem Bereich von möglichen Werten, die von der ersten Ausführungsumgebung bereitgestellt werden, einen erforderlichen Teilsatz der Anzahl von unabhängig variablen Initialisierungsbedingungen und für jeden der Teilsätze einen erforderlichen Bereich von Werten zum Steuern des steuerbaren physischen Systems spezifiziert;
Erzeugen einer eingeschränkten Version der ersten Ausführungsumgebung als die Simulationsausführungsumgebung (106), die nur einen eingeschränkten Satz von möglichen Werten für die mehreren unabhängig variablen Initialisierungsbedingungen auf der Basis des spezifizierten erforderlichen Teilsatzes und des erforderlichen Bereiches von Werten für jeden der Teilsätze bereitstellt, wobei das Erzeugen der eingeschränkten Version der ersten Ausführungsumgebung Folgendes beinhaltet:
für jede der unabhängig variablen Initialisierungsbedingungen in dem erforderlichen Teilsatz:
Einstellen des Werts, der aus mehreren Werten auswählbar ist, die den jeweiligen erforderlichen Bereich von Werten darstellen; und
wobei das Verfahren durch Folgendes gekennzeichnet ist:
Erzeugen einer Darstellung des Anfangsmodells (102) als das Simulationsmodell (104), das in der Simulationsausführungsumgebung (106) ausführbar ist, wobei das Erzeugen einer Darstellung des Anfangsmodells das Ausführen des Anfangsmodells (102) in der ersten Ausführungsumgebung (103) mit mehreren unterschiedlichen Kombinationen aus dem spezifizierten erforderlichen Teilsatz und dem erforderlichen Bereich von Werten für jeden der Teilsätze und das Erzeugen einer oder mehrerer Nachschlagetabellen, um das Anfangsmodell oder einen Teilabschnitt davon in dem Simulationsmodell (104) auf der Basis der Ergebnisse des Ausführens darzustellen, beinhaltet; und
Einbetten des produzierten Simulators in ein Steuerungsprogramm zur Verwendung beim Steuern des steuerbaren physischen Systems.

2. Verfahren nach Anspruch 1, wobei:
das erhaltene Anfangsmodell (102) außerdem eine bestimmte Anordnung von Simulationselementen und Querverbindungen von mehreren Anordnungen, die in der ersten Ausführungsumgebung (103) ausführbar sind, spezifiziert und
das Simulationsmodell (104) eine Simulationsanordnung von Simulationselementen und
Querverbindungen auf der Basis der bestimmten Anordnung spezifiziert.

3. Verfahren nach Anspruch 2, wobei
die Simulationsausführungsumgebung (106) dazu konfiguriert ist, nur Simulationsmodelle (104) mit der Simulationsanordnung auszuführen.

4. Verfahren nach einem der vorhergehenden Ansprüche, wobei das Erzeugen einer Darstellung des Anfangsmodells Folgendes beinhaltet:
Auswählen von Funktionen, um das Anfangsmodell (102) darzustellen, aus einem vorherbestimmten Satz von konfigurierbaren Basisfunktionen und Konfigurieren der ausgewählten Basisfunktionen auf der Basis des Anfangsmodells.

5. Verfahren nach Anspruch 4, wobei
das Auswählen der Basisfunktionen und/oder das Konfigurieren der ausgewählten Basisfunktionen auf der Basis des Anfangsmodells Folgendes beinhalten:
Ausführen des Anfangsmodells (102) in der ersten Ausführungsumgebung (103) mit mehreren unterschiedlichen Kombinationen aus den spezifizierten zugelassenen Kombinationen von Werten und
Auswählen und/oder Konfigurieren der ausgewählten Basisfunktionen auf der Basis von Ergebnissen des Ausführens.

6. Verfahren nach einem der vorhergehenden Ansprüche, wobei das Erzeugen einer Darstellung des Anfangsmodells Folgendes beinhaltet:
aus dem Anfangsmodell (102) Identifizieren eines Teils, der mehr als eine querverbundene Simulationsentität umfasst, die durch eine einzige Funktion dargestellt werden kann, die die Eingaben in den identifizierten Teil in die Ausgaben des identifizierten Teils umwandelt, und
Auswählen und Konfigurieren einer Funktion, um den identifizierten Teil des Anfangsmodells (102) in dem Simulationsmodell (104) darzustellen, auf der Basis der Eingaben in den und Ausgaben aus dem identifizierten Teil in einer Reihe von Ausführungen des Anfangsmodells (102) in der ersten Ausführungsumgebung (103).

7. Verfahren nach einem der vorhergehenden Ansprüche, wobei:
das physische System (101) ein Datenzentrum ist und der Simulator (108) ein Datenzentrenenergiesimulator ist.

8. Verfahren nach einem der Ansprüche 1 bis 7, wobei das Verfahren computerimplementiert ist.

9. Simulatorproduktionsvorrichtung, die dazu betreibbar ist, Steuerungssoftware zum Steuern eines steuerbaren physischen Systems zu produzieren, wobei die Steuerungssoftware einen Simulator (108) beinhaltet, der dazu konfiguriert ist, das Verhalten des steuerbaren physischen Systems (101) zu simulieren, wobei der Simulator (108) ein Simulationsmodell (104), das das steuerbare physische System (101) darstellt, und eine Simulationsausführungsumgebung (106), in der das Simulationsmodell (104) ausführbar ist, umfasst; wobei die Vorrichtung Folgendes umfasst:
eine Einheit zum Erhalten von Anfangsmodellen, die dazu betreibbar ist, ein Anfangsmodell (102) zu erhalten, das zur Ausführung in einer ersten Ausführungsumgebung (103) konfiguriert ist und das steuerbare physische System (101) darstellt, wobei die erste Ausführungsumgebung ausgeführte Simulationsmodelle mit einem beliebigen von einem Bereich von Werten für jede einer Anzahl von unabhängig variablen Initialisierungsbedingungen bereitstellt, wobei das Anfangsmodell (102) aus dem Bereich von möglichen Werten, die von der ersten Ausführungsumgebung bereitgestellt werden, einen erforderlichen Teilsatz der Anzahl von unabhängig variablen Initialisierungsbedingungen und für jeden der Teilsätze einen erforderlichen Bereich von Werten zum Steuern des steuerbaren physischen Systems spezifiziert; und
eine Simulationsausführungsumgebungsgeneratoreinheit, die dazu betreibbar ist, eine eingeschränkte Version der ersten Ausführungsumgebung als die Simulationsausführungsumgebung (106) zu erzeugen, die nur einen eingeschränkten Satz von möglichen Werten für die mehreren unabhängig variablen Initialisierungsbedingungen auf der Basis des spezifizierten erforderlichen Teilsatzes und des erforderlichen Bereiches von Werten für jeden der Teilsätze bereitstellt, wobei das Erzeugen der eingeschränkten Version der ersten Ausführungsumgebung Folgendes beinhaltet:
für jede der unabhängig variablen Initialisierungsbedingungen in dem erforderlichen Teilsatz:
Einstellen des Werts, der aus mehreren Werten auswählbar ist, die den jeweiligen erforderlichen Bereich von Werten darstellen; und
wobei die Vorrichtung durch Folgendes gekennzeichnet ist:
einen Simulationsmodellgenerator, der dazu betreibbar ist, eine Darstellung des Anfangsmodells (102) als das Simulationsmodell (104), das in der Simulationsausführungsumgebung (106) ausführbar ist, zu erzeugen, wobei das Erzeugen einer Darstellung des Anfangsmodells das Ausführen des Anfangsmodells (102) in der ersten Ausführungsumgebung (103) mit mehreren unterschiedlichen Kombinationen aus dem spezifizierten erforderlichen Teilsatz und dem erforderlichen Bereich von Werten für jeden der Teilsätze und das Erzeugen einer oder mehrerer Nachschlagetabellen, um das Anfangsmodell oder einen Teilabschnitt davon in dem Simulationsmodell (104) auf der Basis der Ergebnisse des Ausführens darzustellen, beinhaltet; und
die Simulatorproduktionsvorrichtung weiterhin dazu konfiguriert ist, den produzierten Simulator in ein Steuerungsprogramm zur Verwendung beim Steuern des steuerbaren physischen Systems einzubetten.

10. Computerprogramm, das bei Ausführung durch einen Computer bewirkt, dass der Computer ein Verfahren nach einem der Ansprüche 1 bis 8 durchführt.

11. Computerprogramm, das bei Ausführung durch einen Computer bewirkt, dass der Computer als eine Simulatorproduktionsvorrichtung nach Anspruch 9 funktioniert.

## Revendications

1. Procédé pour produire un logiciel de commande pour commander un système physique contrôlable, le procédé comprenant la production d'un simulateur (108) configuré pour simuler le comportement du système physique contrôlable (101), le simulateur (108) comprenant un modèle de simulation (104) représentant le système physique contrôlable (101) et un environnement d'exécution de simulation (106) dans lequel le modèle de simulation (104) est exécutable ; le procédé comprenant les étapes consistant à :
obtenir un modèle initial (102) configuré pour une exécution dans un premier environnement d'exécution (103) et représentant le système physique contrôlable (101), le premier environnement d'exécution fournissant des modèles de simulation qui sont exécutés avec l'une quelconque d'une plage de valeurs pour chacune d'un nombre de conditions d'initialisation indépendamment variables, le modèle initial (102) spécifiant, parmi la plage de valeurs possibles fournies par le premier environnement d'exécution, un sous-ensemble requis du nombre de conditions d'initialisation indépendamment variables et, pour chacun des sous-ensembles, une plage requise de valeurs pour commander le système physique contrôlable ;
générer, en tant qu'environnement d'exécution de simulation (106), une version limitée du premier environnement d'exécution qui fournit uniquement un ensemble limité de valeurs possibles pour la pluralité de conditions d'initialisation indépendamment variables sur la base du sous-ensemble requis spécifié et de la plage de valeurs requise pour chacun des sous-ensembles, dans lequel la génération de la version limitée du premier environnement d'exécution comprend l'étape consistant à :
pour chacune des conditions d'initialisation indépendamment variables dans le sous-ensemble requis :
établir la valeur pour qu'elle puisse être sélectionnée parmi une pluralité de valeurs représentant la plage de valeurs requise respective ; et
le procédé étant **caractérisé par** les étapes consistant à :
générer, en tant que modèle de simulation (104), une représentation du modèle initial (102) qui est exécutable dans l'environnement d'exécution de simulation (106), dans lequel la génération d'une représentation du modèle initial comprend l'exécution du modèle initial (102) dans le premier environnement d'exécution (103) avec une pluralité de combinaisons différentes parmi le sous-ensemble requis spécifié et la plage de valeurs requise pour chacun des sous-ensembles, et la création d'une ou plusieurs tables de consultation pour représenter le modèle initial ou une sous-section de celui-ci dans le modèle de simulation (104) sur la base des résultats de l'exécution ; et
intégrer le simulateur produit dans un programme de commande destiné à être utilisé pour commander le système physique contrôlable.

2. Procédé selon la revendication 1, dans lequel :
le modèle initial obtenu (102) spécifie également un agencement particulier d'éléments de simulation et d'interconnexions parmi une pluralité d'agencements exécutables dans le premier environnement d'exécution (103) ; et
le modèle de simulation (104) spécifie un agencement de simulation d'éléments de simulation et d'interconnexions sur la base de l'agencement particulier.

3. Procédé selon la revendication 2, dans lequel l'environnement d'exécution de simulation (106) est configuré pour exécuter uniquement des modèles de simulation (104) ayant l'agencement de simulation.

4. Procédé selon l'une quelconque des revendications précédentes, dans lequel la génération d'une représentation du modèle initial comprend :
la sélection de fonctions pour représenter le modèle initial (102) à partir d'un ensemble prédéterminé de fonctions de base configurables et la configuration des fonctions de base sélectionnées sur la base du modèle initial.

5. Procédé selon la revendication 4, dans lequel
la sélection des fonctions de base et/ou la configuration des fonctions de base sélectionnées sur la base du modèle initial comprend :
l'exécution du modèle initial (102) dans le premier environnement d'exécution (103) avec une pluralité de combinaisons différentes parmi les combinaisons de valeurs autorisées spécifiées ; et
la sélection et/ou la configuration des fonctions de base sélectionnées sur la base de résultats de l'exécution.

6. Procédé selon l'une quelconque des revendications précédentes, dans lequel la génération d'une représentation du modèle initial comprend :
à partir du modèle initial (102), l'identification d'une partie comprenant plus d'une entité de simulation interconnectée qui peut être représentée par une fonction unique convertissant les entrées dans la partie identifiée en sorties de la partie identifiée, et
la sélection et la configuration d'une fonction pour représenter la partie identifiée du modèle initial (102) dans le modèle de simulation (104), sur la base des entrées et sorties de la partie identifiée dans une série d'exécutions du modèle initial (102) dans le premier environnement d'exécution (103).

7. Procédé selon l'une quelconque des revendications précédentes, dans lequel
le système physique (101) est un centre de données et le simulateur (108) est un simulateur d'énergie de centre de données.

8. Procédé selon l'une quelconque des revendications 1 à 7, dans lequel le procédé est mis en oeuvre par ordinateur.

9. Appareil de production de simulateur opérationnel pour produire un logiciel de commande pour commander un système physique contrôlable, le logiciel de commande comprenant un simulateur (108) configuré pour simuler le comportement du système physique contrôlable (101), le simulateur (108) comprenant un modèle de simulation (104) représentant le système physique contrôlable (101) et un environnement d'exécution de simulation (106) dans lequel le modèle de simulation (104) est exécutable ; l'appareil comprenant :
une unité d'obtention de modèle initial opérationnelle pour obtenir un modèle initial (102) configuré pour une exécution dans un premier environnement d'exécution (103) et représentant le système physique contrôlable (101), le premier environnement d'exécution fournissant des modèles de simulation qui sont exécutés avec l'une quelconque d'une plage de valeur pour chacune d'un nombre de conditions d'initialisation indépendamment variables, le modèle initial (102) spécifiant parmi la plage de valeurs possibles fournies par le premier environnement d'exécution, un sous-ensemble requis du nombre de conditions d'initialisation indépendamment variables et, pour chacun des sous-ensembles, une plage de valeurs requise pour commander le système physique contrôlable ; et
une unité de génération d'environnement d'exécution de simulation opérationnelle pour générer, en tant qu'environnement d'exécution de simulation (106), une version limitée du premier environnement d'exécution qui fournit uniquement un ensemble limité de valeurs possibles pour la pluralité de conditions d'initialisation indépendamment variables sur la base du sous-ensemble requis spécifié et de la plage de valeurs requise pour chacun des sous-ensembles, la génération de la version limitée du premier environnement d'exécution comprenant l'étape consistant à :
pour chacune des conditions d'initialisation indépendamment variables dans le sous-ensemble requis :
établir la valeur pour qu'elle puisse être sélectionnée parmi une pluralité de valeurs représentant la plage de valeurs requise respective ; et
l'appareil est **caractérisé par** :
un générateur de modèle de simulation opérationnel pour générer, en tant que modèle de simulation (104), une représentation du modèle initial (102) qui est exécutable dans l'environnement d'exécution de simulation (106), dans lequel la génération d'une représentation du modèle initial comprend l'exécution du modèle initial (102) dans le premier environnement d'exécution (103) avec une pluralité de combinaisons différentes parmi le sous-ensemble requis spécifié et la plage de valeurs requise pour chacun des sous-ensembles, et la création d'une ou plusieurs tables de consultation pour représenter le modèle initial ou une sous-section de celui-ci dans le modèle de simulation (104) sur la base des résultats de l'exécution ; et
l'appareil de production de simulateur est en outre configuré pour intégrer le simulateur produit dans un programme de commande destiné à être utilisé pour commander le système physique contrôlable.

10. Programme informatique qui, lorsqu'il est exécuté par un ordinateur, amène l'ordinateur à exécuter un procédé selon l'une quelconque des revendications 1 à 8.

11. Programme informatique qui, lorsqu'il est exécuté par un ordinateur, amène l'ordinateur à fonctionner comme un appareil de production de simulateur selon la revendication 9.
